(19) Europäisches Patentamt
European Patent Office
Office européen des brevets

(11) **EP 3 404 853 B1**

(12) # EUROPEAN PATENT SPECIFICATION

(45) Date of publication and mention
of the grant of the patent:
**18.09.2019 Bulletin 2019/38**

(51) Int Cl.:
**H04B 10/2507** *(2013.01)*

(21) Application number: **17305579.9**

(22) Date of filing: **18.05.2017**

(54) **MULTI-CHANNEL OPTICAL COMMUNICATIONS SYSTEM MITIGATING NON-UNITARY IMPAIRMENTS**

MEHRKANALIGES OPTISCHES KOMMUNIKATIONSSYSTEM ZUR ABSCHWÄCHUNG VON AUS VERSCHIEDENEN TEILEN BESTEHENDEN STÖRUNGEN

SYSTÈME DE COMMUNICATIONS OPTIQUES À CANAUX MULTIPLES PERMETTANT D'ATTÉNUER DES DÉGRADATIONS NON UNITAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.11.2018 Bulletin 2018/47**

(73) Proprietor: **Nokia Solutions and Networks Oy 02610 Espoo (FI)**

(72) Inventors:
• **DUMENIL, Arnaud**
**91620 NOZAY (FR)**
• **AWWAD, Elie**
**91620 NOZAY (FR)**
• **MEASSON, Cyril**
**91620 NOZAY (FR)**

(74) Representative: **Loyer & Abello**
**9, rue Anatole de la Forge**
**75017 Paris (FR)**

(56) References cited:
**US-A1- 2014 363 164**

• **ZHU CHEN ET AL: "Pairwise coding to mitigate polarization dependent loss", 2015 OPTICAL FIBER COMMUNICATIONS CONFERENCE AND EXHIBITION (OFC), OSA, 22 March 2015 (2015-03-22), pages 1-3, XP032784514, DOI: 10.1364/OFC.2015.W4K.4 [retrieved on 2015-06-10]**
• **SIMOENS F ET AL: "MULTI-DIMENSIONAL MAPPING FOR BIT-INTERLEAVED CODED MODULATION WITH BPSK/QPSK SIGNALING", IEEE COMMUNICATIONS LETTERS, IEEE SERVICE CENTER, PISCATAWAY, NJ, US, vol. 9, no. 5, 1 May 2005 (2005-05-01), pages 453-455, XP001229733, ISSN: 1089-7798, DOI: 10.1109/LCOMM.2005.1431169**

## Description

## Field of the invention

The invention relates to the technical field of optical communications.

## Background

Multiple-channel optical fiber communication systems suffer from channel-dependent loss also called non-unitary loss. Polarization dependent loss (PDL) is a particular case of non-unitary loss implied by polarization and spatial division multiplexing. PDL occurs when one polarization mode suffers more loss than the other. It can be caused by the concatenation of various optical components. Conventional signaling techniques such as QPSK or 16QAM make the achievable information rate dependent on the rotation angle, namely the angle between the PDL axes with different attenuations.

Multiple-channel optical fiber communication systems of the prior art may experience a significant degradation in performance in some worst case scenarios. Several schemes have been proposed to overcome polarization dependent loss such as the ones described in documents ZHU, Chen, SONG, Binhuang, CORCORAN, Bill, et al. Improved polarization dependent loss tolerance for polarization multiplexed coherent optical systems by polarization pairwise coding. Optics express, 2015, vol. 23, no 21, p. 27434-27447, and AWWAD, Elie, JAOUËN, Yves, et OTHMAN, Ghaya Rekaya-Ben. Polarization-time coding for PDL mitigation in long-haul PolMux OFDM systems. Optics express, 2013, vol. 21, no 19, p. 22773-22790. Due to the cardinality of the multi-dimensional constellation points, these schemes exhibit a prohibitively high complexity compared to potential gains in the case of high-speed communications.

Therefore, there is an unfulfilled need for a low-complexity and efficient method for reducing the impact of non-unitary loss in multiple-channel optical fiber communication systems.

## Summary

The basic idea of the invention is to transmit a combination of symbols over each transmission channel instead of transmitting one symbol over each transmission channel. Therefore no symbol is transmitted over a single transmission channel. The effect of the invention is to average the mutual information (which is representative of the rate of symbols successfully transmitted) so as to avoid the worst case scenario corresponding to the transmission channel experimenting high loss.

The invention provides a multi-channel optical transmitter for transmitting a multi-channel signal in the optical domain, wherein the multi-channel optical transmitter stores a first sequence of mappings successive in time, wherein, for any time slot, the mapping of the first sequence is the inverse of a corresponding mapping of a second sequence of mappings stored at a multi-channel optical receiver, wherein each one of the first and second sequences of mappings includes at least two distinct mappings, the multi-channel optical transmitter comprising:

a plurality of symbol generators, each symbol generator being configured for generating a symbol stream at a common symbol rate based on a sub-stream of the data stream to be transmitted, each symbol stream including one symbol per time slot, wherein the symbols of the symbol streams at a given time slot constitute a symbol vector,

a digital mapping module for performing the first sequence of mappings on each symbol vector in order to obtain a mapped symbol vector,

an emission unit configured for emitting a multi-channel signal multiplexing a plurality of transmission channels, wherein each transmission channel is modulated with a symbol of the mapped symbol vector.

Thanks to the mapping operation performed at the digital mapping module, at each time slot, a combination of symbols is transmitted over each transmission channel. Thanks to the inverse mapping operation performed at the digital inverse mapping module, the original data stream is recovered at the receiver. Since no symbol is transmitted over a single transmission channel, even if some transmission channels are experimenting important loss, the overall probability of receiving a symbol is improved. Moreover since the mapping performed at the digital mapping module varies with time, the transmission channels used to transmit a sub-stream vary over time. Therefore no sub-stream is impacted in the long run and the overall mutual information is significantly improved.

In embodiments, the first and second sequences of mappings are periodical sequences of mappings or a pseudo random sequences of mappings.

In embodiments, each mapping of the first and second sequence of mappings is a linear mapping.

In embodiments, each mapping of the first and second sequence of mappings is a rotation.

In embodiments, the plurality of transmission channels are multiplexed into the multi-channel signal using one or more multiplexing techniques of a group of multiplexing techniques including space-division multiplexing, frequency-division multiplexing, time-division multiplexing, polarization-division multiplexing, wavelength-division multiplexing, multi-modal multiplexing, multi-core multiplexing, multi-carrier multiplexing, and orthogonal frequency-division multiplexing.

The invention also provides a method for transmitting a signal in the optical domain, the method including,

storing a first sequence of mappings successive in time, wherein, for any time slot, the mapping of the first sequence is the inverse of a corresponding mapping of a second sequence of mappings stored at a multi-channel optical receiver, wherein each one of the first and second sequences of mappings includes at least two distinct mappings,

generating symbol streams at a common symbol rate, each symbol stream including one symbol per time slot, wherein the symbols of the symbol streams at a given time slot constitute a symbol vector, performing the first sequence of mappings on each symbol vector in order to obtain a mapped symbol vector, emitting a multi-channel signal multiplexing a plurality of transmission channels, wherein each transmission channel is modulated with a symbol of the mapped symbol vector

The invention also provides a multi-channel optical receiver for receiving a multi-channel signal in the optical domain, wherein the multi-channel optical receiver stores a second sequence of mappings successive in time, wherein, for any time slot, the mapping of the second sequence of mappings is the inverse of a corresponding mapping of a first sequence of mappings performed on the multi-channel signal, wherein each one of the first and second sequences of mappings includes at least two distinct mappings, the multi-channel optical receiver comprising:

a reception unit configured for receiving the multi-channel signal and extracting received symbol vectors,
a digital inverse mapping module for performing the second sequence of mappings on each received symbol vector in order to obtain a restored symbol vector.

In embodiments, the first sequence of mappings as well as the second sequence of mappings are structured into synchronized time segments, each one of the first and second sequences of mappings including one mapping per time segment, and wherein the data stream to be transmitted is structured into time frames, each time frame including an error detection and correction code, the duration of a time frame being longer than the duration of a time segment, and wherein the multi-channel optical receiver comprises a FEC module for performing error detection and correction on the restored symbol streams.

In embodiments, the receiver is further configured for measuring the signal-to-noise ratio of the received signal, and wherein the receiver is configured for updating the first and second sequences of mappings in function of the measured signal-to-noise ratio of the received signal and send the updated first sequence of mappings to the transmitter.

The invention also provides a method for receiving a multi-channel signal in the optical domain, the method including,

storing a second sequence of mappings successive in time, wherein, for any time slot, the mapping of the second sequence of mappings is the inverse of a corresponding mapping of a first sequence of mappings performed on the multi-channel signal,
receiving the multi-channel signal and extracting received symbol vectors, and performing the second sequence of mappings on each received symbol vector in order to obtain a restored symbol vector.

The invention also provides an optical communications system including a multi-channel optical transmitter, a multi-channel optical receiver, and an optical link connecting the multi-channel optical receiver to the multi-channel optical transmitter in the optical domain, wherein the multi-channel optical transmitter stores a first sequence of mappings successive in time, the multi-channel optical receiver storing a second sequence of mappings) successive in time, wherein, for any time slot, the mapping of the first sequence is the inverse of the mapping) of the second sequence, wherein each one of the first and second sequences of mappings includes at least two distinct mappings,

the multi-channel optical transmitter comprising:

a plurality of symbol generators, each symbol generator being configured for generating a symbol stream at a common symbol rate based on a sub-stream of the data stream to be transmitted, each symbol stream including one symbol per time slot, wherein the symbols of the symbol streams at a given time slot constitute a symbol vector,
a digital mapping module for performing the first sequence of mappings on each symbol vector in order to obtain a mapped symbol vector,
an emission unit configured for emitting a multi-channel signal multiplexing a plurality of transmission channels, wherein each transmission channel is modulated with a symbol of the mapped symbol vector,

the multi-channel optical receiver comprising:

a reception unit configured for receiving the multi-channel signal and extracting received symbol vectors,
a digital inverse mapping module for performing the second sequence of mappings on each received symbol vector in order to obtain a restored symbol vector.

The invention also provides a method for performing an optical communication in an optical communications system including a multi-channel optical transmitter, a multi-channel optical receiver, and an optical link connecting the multi-channel optical receiver to the multi-channel optical transmitter in the optical domain, the method including,

storing a first sequence of mappings successive in time at the multi-channel optical transmitter,

storing a second sequence of mappings successive in time at the multi-channel optical receiver, wherein, for any time slot, the mapping of the first sequence is the inverse of the mapping of the second sequence, wherein each one of the first and second sequences of mappings includes at least two distinct mappings,

the method further including, at the multi-channel optical transmitter, generating symbol streams at a common symbol rate, each symbol stream including one symbol per time slot, wherein the symbols of the symbol streams at a given time slot constitute a symbol vector, performing the first sequence of mappings on each symbol vector in order to obtain a mapped symbol vector, emitting a multi-channel signal multiplexing a plurality of transmission channels, wherein each transmission channel is modulated with a symbol of the mapped symbol vector

the method further including, at the multi-channel optical receiver, receiving the multi-channel signal and extracting received symbol vectors, and performing the second sequence of mappings on each received symbol vector in order to obtain a restored symbol vector.

The invention also provides a computer program comprising executable code that causes a computer to perform all the steps of a method as described above when executed

**Brief description of the drawings**

These and other aspects of the invention will be apparent from and elucidated with reference to the embodiments described hereinafter, by way of example, with reference to the drawings.

Figure 1 is a functional representation of an optical communication system according to an embodiment of the invention.
Figure 2 is a functional partial representation of a multi-channel optical transmitter according to an embodiment of the invention.
Figure 3 is a functional representation of a multi-channel optical receiver according to an embodiment of the invention.
Figure 4 represents the mutual information in relation to the signal-to-noise ratio for two different transmission channels of a multi-channel optical communication system of the prior art and for an optical communication system according to an embodiment of the invention.

**Detailed description of the embodiments**

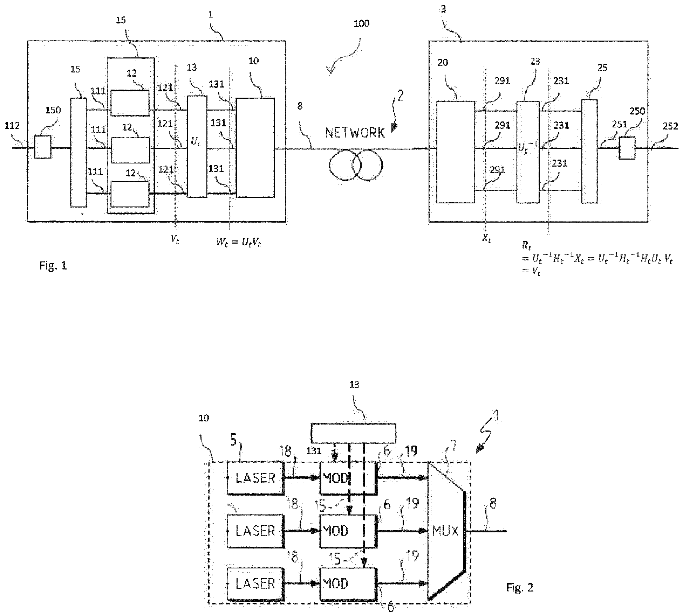

In Figure 1, an optical communication system 100 comprises a multi-channel optical transmitter 1, an optical network 2 and a multi-channel optical receiver 3. A multiplexed signal 8 generated at the optical transmitter 1 is transmitted to the multi-channel optical receiver 3.

Although the optical network 2 is simply depicted as a length of optical fiber, the skilled person will appreciate that the optical network 2 may be constituted by a variety of optical components such as waveguides, amplifiers, filters, regenerators, splitters, combiners, optical switches and the like. An optical network 2 may have any number of links and nodes arranged in any topology, such as point-to-point, ring, mesh and others.

The multi-channel optical transmitter 1 comprises an assembler 15 including a plurality of symbol generators 12 each configured for generating a symbol stream 121, an emission unit 10 configured for emitting a multi-channel signal 8 including a plurality of transmission channels, and a digital mapping module 13 configured for mapping the symbol streams 121 with transmission channels.

An assembler 15 is configured for separating a data stream 112 to be transmitted into as many sub-streams 111 as there are transmission channels. Each symbol generator 12 is configured for generating a symbol stream 121 based on one of the sub-streams 111. All the symbol streams 121 are synchronized and divided into time slots t. All the symbol generators 12 are synchronized and generate a symbol at each time slot. The symbol streams 121 may in particular be bit streams, in which case a symbol is a 0 or a 1, or complex symbol streams in which a symbol is a complex number e.g. in a QAM or QPSK constellation.

The transmitter 1 may include an error detection and correction code (FEC) module 150 for applying FEC processing to the data stream 112. The data stream 112 is structured into time frames; each time frame is encoded in a redundant way by using a FEC code for controlling errors in data transmission. The redundancy allows the receiver 3 to detect a limited number of errors in the received symbol stream, and to correct these errors without retransmission.

All the symbols generated on a given time slot constitute a symbol vector associated to said time slot $t$. A symbol vector can be represented by a finite-dimensional vector $V_t$. Each dimension corresponds to a multiplexing technique used to multiplex the multi-channel signal 8 as will be explained below. As an example, in the case of a Polarization-division multiplexing (PDM) QPSK modulation the dimension is 2. The size of the vector in a dimension represents the number of channels multiplexed through the associated multiplexing technique.

The multi-channel optical transmitter 1 stores a first sequence of mappings. The multi-channel optical receiver 3 stores a second sequence of mappings. The first sequence of mappings as well as the second sequence of mappings is structured into synchronized time segments, each one of the first and second sequences of mappings including one mapping per time segment. A time segment includes one or more time slots. The time segments may not all have the same duration but they all have a duration that is a multiple of the duration of a time slot. All the mappings of the first and second mappings sequences are invertible transformations. For any given time segment, the mapping of the first sequence is the inverse of the mapping of the second sequence.

The first and second sequences of mappings both include at least two distinct mappings. The first and second sequences of mappings may in particular be periodical or pseudo random.

The emission unit 10 is configured for emitting a multi-channel signal 8 including a plurality of transmission channels.

The digital mapping module 13 maps the symbols with the transmission channels according to the first sequence of mappings. To that end, the digital mapping module 13 performs, on each symbol vector $V_t$, the mapping of the first sequence of mappings corresponding to the time sequence including the time slot associated to the symbol vector in order to produce a mapped symbol vector $W_t$. A mapping of the first sequence of mappings can be represented by a matrix $U_t$, and $W_t = U_t V_t$.

The mappings of the first and second sequences of mappings are preferably linear. The mappings of the first and second sequences of mappings may in particular be unitary mappings, like rotations and in particular 2x2 real-valued matrix rotations. The mappings of the first and second sequences of mappings may in particular be rotation matrix of the form $R_\alpha$ with a periodically varying angle $\alpha$ at consecutive time segments. The mapping may in particular be a mapping $U_t$ such that $U_t V_t$ lies in the bi-dimensional or multi-dimensional complex plane.

Each symbol of a mapped symbol vector $W_t$ is carried on a different transmission channel of the multi-channel signal 8. The stream carried by a given transmission channel is called a mapped data stream 131.

The plurality of mapped data streams 131 are multiplexed into the multi-channel signal 8 using one or more multiplexing techniques of a group of multiplexing techniques including space-division multiplexing, frequency-division multiplexing, time-division multiplexing, polarization-division multiplexing, wavelength-division multiplexing, multi-modal multiplexing, multi-core multiplexing, multi-carrier multiplexing, and orthogonal frequency-division multiplexing. The transmission channels are routed together through the optical link or network 2, therefore co-propagating together all the way from transmitter 1 to receiver 3.

An implementation of an embodiment of the emission unit 10 using wavelength division multiplexing is shown on Figure 2. An implementation of another embodiment of the emission unit 10 using polarization division multiplexing is disclosed in document Yan Han and Guifang Li, "Coherent optical communication using polarization multiple-input-multiple-output," Opt. Express 13, 7527-7534 (2005).

The emission unit 10 comprises at least one laser source 5 configured for emitting at least one optical carrier signal 18. A respective optical modulator 6 is arranged in order to modulate each generated optical carrier signal 18 with a respective mapped data stream 131 to produce a respective modulated optical signal 19. An optical modulator 6 can be of various types. For example, an optical modulator 6 can be an electro-optic modulator, an electro-absorption modulator, or other types of modulator. Optical modulators 6 may in particular employ one of a QPSK modulation scheme and a QAM modulation scheme. In the case of polarization-division multiplexing, optical modulators 6 may in particular be Mach-Zehnder modulators each comprising two Mach-Zehnder interferometers to modulate respectively an in-phase component and a quadrature-phase component of the optical carrier signal, each component of the optical carrier signal corresponding to a transmission channel. The plurality of modulated optical signals 19 is combined by an optical multiplexer 7 configured to multiplex the plurality of modulated optical signals 19 into the multi-channel signal 8.

The reception unit 20 will now be described in relation to Figure 1. The multi-channel optical receiver 3 comprises a reception unit 20, a digital inverse mapping module 23 and optionally a disassembler 25.

The reception unit 20 is configured for receiving the multi-channel signal 8 and extracting received symbol streams 291.

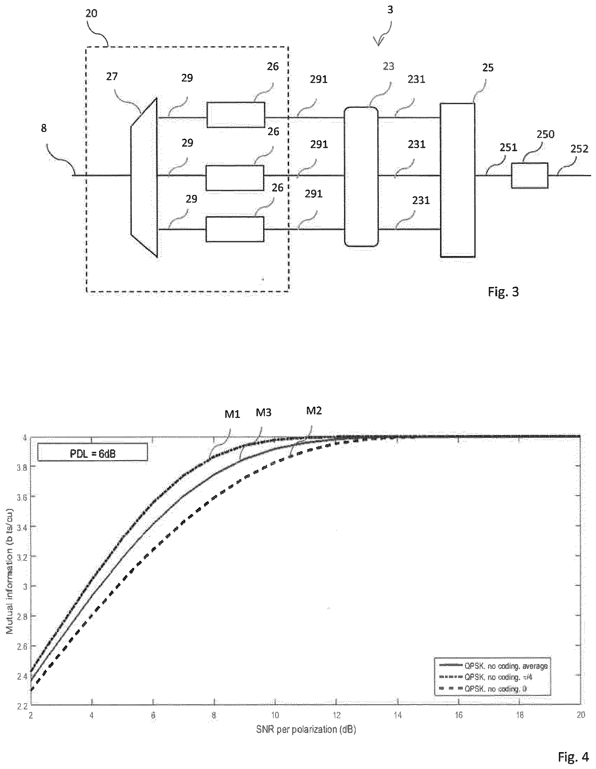

An implementation of the reception unit 10 is shown on Figure 3. The rcccption unit 20 comprises an optical input for receiving the multi-channel signal 8, a demultiplexer 27 for separating the plurality of modulated optical signals 29 as a function of the transmission channels, a plurality of demodulators 26 for detecting the plurality of modulated optical signals 29 and extracting received symbol streams 291. In the case of phase-division multiplexing, the demodulator 26 includes a coherent detection chain for detecting an in-phase component and a quadrature-phase component of the modulated optical signal.

Back to figure 1, the symbols of all the received symbol streams 291 on a given time slot $t$ constitute a received symbol vector $X_t$. The received symbol vector $X_t$ is identical to the mapped symbol vector $W_t = U_t V_t$ except for the transformation introduced during transmission. If $H_t$ is the transfer matrix of the optical channel, $X_t = H_t U_t V_t$.

The reception unite 20 compensate for the transformation introduced during transmission using digital signal processing like for example zero forcing or maximum likelihood estimation algorithms. The digital signal processing applied should be the inverse $H_t^{-1}$ of the transfer matrix $H_t$ of the optical channel.

The digital inverse mapping module 23 maps each received symbol with a restored symbol stream 231 according to the second sequence of mappings. To that end, the digital inverse mapping module 23 performs, on each received symbol vector $X_t$, the mapping $U_t^{-1}$ of the second sequence of mappings corresponding to the time segment including the time slot associated to the received symbol vector, in order to compute a restored symbol vector. A restored symbol vector can be represented by a finite-dimensional vector space $R_t = U_t^{-1}H_t^{-1}X_t = U_t^{-1}H_t^{-1}H_tU_tV_t = V_t$. The restored symbol vector $R_t$ is identical to the original symbol vector $V_t$ except for some errors that might have been introduced during the transmission. The restored symbol vectors $R_t$ forms over time restored symbol streams 231.

The disassembler 25 reconstructs a restored data stream 251 from the restored symbol streams 231. If the data stream 112 includes a FEC, the receiver 3 includes a FEC module 250 for applying FEC processing to the restored data stream 251 in order to output a corrected data stream 252. The duration of a FEC time frame is longer than the duration of a time segment, so that any time frame is transmitted over at least two different transmission channels over time. Therefore even if one of the transmission channels is experiencing important loss, at least part of the time frame is transmitted over another transmission channel, so that the received time frame does not include too many errors, so that the forward error correction is able to correct the limited number of errors in the time frame.

As an example, the receiver may be similar to the digital coherent receiver described in document Seb J. Savory, "Digital filters for coherent optical receivers," Opt. Express 16, 804-817 (2008). The digital inverse mapping operation is performed at the digital filtering stage of figure 2 of the document.

Thanks to the mapping operation performed at the digital mapping module 13, no symbol is transmitted over a single transmission channel. As a consequence even if some transmission channels are experiencing important loss, the probability of receiving a symbol is improved. Moreover since the mapping performed at the digital mapping module 13 varies with time, the transmission channels used to transmit a sub-stream vary over time. Therefore no sub-stream is impacted in the long run and the overall signal-to-noise ratio of the transmitted signal is significantly improved.

Figure 4 represents the mutual information in relation to the signal-to-noise ratio for a first data stream M1 transmitted over a first transmission channel and for a second data stream M2 transmitted over a second transmission channel according to the prior art, as well as the mutual information in relation to the signal-to-noise ratio for a third data stream M3 transmitted over an optical communication system according to an embodiment of the invention. The first transmission channel is experimenting low loss while the second is experimenting high loss. As can be observed on figure 4, the invention averages the mutual information (which is representative of the rate of symbols successfully transmitted) so as to avoid the worst case scenario corresponding to the transmission channel experimenting high loss.

The receiver 3 may include a detector for measuring the signal-to-noise ratio of the received signal. The receiver 3 may update the first and second sequences of mappings in function of the measured signal-to-noise ratio of the received signal and send the updated first sequence of mappings to the transmitter 1.

In particular, if the receiver 3 detects a time segment during which the global signal-to-noise ratio over all received data streams is at a maximum, the receiver 3 may update the first and second sequences of mapping in order to add more of the mapping corresponding to said time segment during which the signal-to-noise ratio is at a maximum, and send the updated first sequence of mappings to the transmitter 1. Additionally or alternatively, the detector may detect a time segment during which the global signal-to-noise ratio is at a minimum, update the first and second sequences of mapping in order to suppress the mapping corresponding to said time segment during which the signal-to-noise ratio is at a minimum and send the updated first sequence of mappings to the transmitter 1.

Elements such as the digital mapping module 13 and the digital inverse mapping module 23 may be implemented in different manners. The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

**Claims**

1. Multi-channel optical transmitter (1) for transmitting a multi-channel signal (8) in the optical domain, wherein the multi-channel optical transmitter (1) stores a first sequence of mappings ($U_t$) successive in time, wherein, for any time slot, the mapping ($U_t$) of the first sequence is the inverse of a corresponding mapping ($U_t^{-1}$) of a second sequence of mappings ($U_t^{-1}$) stored at a multi-channel optical receiver (3), wherein each one of the first and second sequences of mappings includes at least two distinct mappings, the multi-channel optical transmitter (1) comprising:

a plurality of symbol generators (12), each symbol generator (12) being configured for generating a symbol stream (121) at a common symbol rate based on a sub-stream (111) of the data stream (112) to be transmitted, each symbol stream (121) including one symbol per time slot, wherein the symbols of the symbol streams at a given time slot constitute a symbol vector ($V_t$), a digital mapping module (13) for performing the first sequence of mappings ($U_t$) on each symbol vector ($V_t$) in order to obtain a mapped symbol vector ($U_t V_t$), an emission unit (10) configured for emitting a multi-channel signal (8) multiplexing a plurality of transmission channels, wherein each transmission channel is modulated with a symbol of the mapped symbol vector ($U_t V_t$).

2. Multi-channel optical transmitter (1) according to claim 1, wherein the first and second sequences of mappings are periodical sequences of mappings or a pseudo random sequences of mappings.

3. Multi-channel optical transmitter (1) according to any one of claims 1 to 2, wherein each mapping ($U_t, U_t^{-1}$) of the first and second sequence of mappings is a linear mapping.

4. Multi-channel optical transmitter (1) according to any one of claims 1 to 3, wherein each mapping ($U_t, U_t^{-1}$) of the first and second sequence of mappings is a rotation.

5. Multi-channel optical transmitter (1) according to any one of claims 1 to 4, wherein the plurality of transmission channels are multiplexed into the multi-channel signal (8) using one or more multiplexing techniques of a group of multiplexing techniques including space-division multiplexing, frequency-division multiplexing, time-division multiplexing, polarization-division multiplexing, wavelength-division multiplexing, multi-modal multiplexing, multi-core multiplexing, multi-carrier multiplexing, and orthogonal frequency-division multiplexing.

6. Method for transmitting a signal in the optical domain, the method including, storing a first sequence of mappings ($U_t$) successive in time, wherein, for any time slot, the mapping ($U_t$) of the first sequence is the inverse of a corresponding mapping ($U_t^{-1}$) of a second sequence of mappings ($U_t^{-1}$) stored at a multi-channel optical receiver (3), wherein each one of the first and second sequences of mappings includes at least two distinct mappings, generating symbol streams (121) at a common symbol rate, each symbol stream including one symbol per time slot, wherein the symbols of the symbol streams at a given time slot constitute a symbol vector ($V_t$), performing the first sequence of mappings ($U_t$) on each symbol vector ($V_t$) in order to obtain a mapped symbol vector ($U_t V_t$), emitting a multi-channel signal (8) multiplexing a plurality of transmission channels, wherein each transmission channel is modulated with a symbol of the mapped symbol vector ($U_t V_t$)

7. Multi-channel optical receiver (3) for receiving a multi-channel signal (8) in the optical domain, wherein the multi-channel optical receiver (3) stores a second sequence of mappings ($U_t^{-1}$) successive in time, wherein, for any time slot, the mapping ($U_t^{-1}$) of the second sequence of mappings ($U_t^{-1}$) is the inverse of a corresponding mapping ($U_t$) of a first sequence of mappings ($U_t$) performed on the multi-channel signal (8), wherein each one of the first and second sequences of mappings includes at least two distinct mappings, the multi-channel optical receiver (3) comprising:

a reception unit (20) configured for receiving the multi-channel signal (8) and extracting received symbol vectors ($X_t$), a digital inverse mapping module (23) for performing the second sequence of mappings ($U_t^{-1}$) on each received symbol vector ($X_t$) in order to obtain a restored symbol vector ($R_t$).

8. Multi-channel optical receiver (3) according to claim 7, wherein, the first sequence of mappings ($U_t$) as well as the second sequence of mappings ($U_t^{-1}$) are structured into synchronized time segments, each one of the first and second sequences of mappings including one mapping per time segment, and wherein the data stream (112) to be transmitted is structured into time frames, each time frame including an error detection and correction code, the duration of a time frame being longer than the duration of a time segment, and wherein the multi-channel optical receiver (3) comprises a FEC module (250) for performing error detection and correction on the restored symbol streams (231).

9. Multi-channel optical receiver (3) according to any one of claims 7 to 8, wherein the receiver (3) is further configured for measuring the signal-to-noise ratio of the received signal, and wherein the receiver (3) is configured for updating the first and second sequences of mappings in function of the measured signal-to-noise ratio of the received signal and send the updated first sequence of mappings to the transmitter (1).

10. Method for receiving a multi-channel signal (8) in the optical domain, the method including,
storing a second sequence of mappings $(U_t^{-1})$ successive in time, wherein, for any time slot, the mapping $(U_t^{-1})$ of the second sequence of mappings $(U_t^{-1})$ is the inverse of a corresponding mapping $(U_t)$ of a first sequence of mappings $(U_t)$ performed on the multi-channel signal (8),
receiving the multi-channel signal (8) and extracting received symbol vectors $(X_t)$, and performing the second sequence of mappings $(U_t^{-1})$ on each received symbol vector $(X_t)$ in order to obtain a restored symbol vector $(R_t)$.

11. Optical communications system (100) including a multi-channel optical transmitter (1) according to any of claims 1 to 5, a multi-channel optical receiver (3) according to any of claims 7 to 9, and an optical link (2) connecting the multi-channel optical receiver (3) to the multi-channel optical transmitter (1) in the optical domain

12. Method for performing an optical communication in an optical communications system including a multi-channel optical transmitter (1), a multi-channel optical receiver (3), and an optical link (2) connecting the multi-channel optical receiver (3) to the multi-channel optical transmitter (1) in the optical domain, the method including,
storing a first sequence of mappings $(U_t)$ successive in time at the multi-channel optical transmitter (1),
storing a second sequence of mappings $(U_t^{-1})$ successive in time at the multi-channel optical receiver (3), wherein, for any time slot, the mapping of the first sequence is the inverse of the mapping of the second sequence, wherein each one of the first and second sequences of mappings includes at least two distinct mappings,
the method further including, at the multi-channel optical transmitter (1), generating symbol streams (121) at a common symbol rate, each symbol stream including one symbol per time slot, wherein the symbols of the symbol streams at a given time slot constitute a symbol vector $(V_t)$, performing the first sequence of mappings $(U_t)$ on each symbol vector $(V_t)$ in order to obtain a mapped symbol vector $(U_tV_t)$, emitting a multi-channel signal (8) multiplexing a plurality of transmission channels, wherein each transmission channel is modulated with a symbol of the mapped symbol vector $(U_tV_t)$
the method further including, at the multi-channel optical receiver (3), receiving the multi-channel signal (8) and extracting received symbol vectors $(X_t)$, and performing the second sequence of mappings $(U_t^{-1})$ on each received symbol vector $(X_t)$ in order to obtain a restored symbol vector $(R_t)$.

13. A computer program comprising executable code that causes a computer to perform all the steps of a method in accordance with claim 12 when executed.

**Patentansprüche**

1. Mehrkanaliger optischer Sender (1) zum Senden eines mehrkanaligen Signals (8) im optischen Bereich, wobei der mehrkanalige optische Sender (1) eine erste Folge von zeitlich aufeinanderfolgenden Zuordnungen $(U_t)$ speichert, wobei für jeden Zeitschlitz die Zuordnung $(U_t)$ der ersten Folge die Umkehrung einer entsprechenden Zuordnung $(U_t^{-1})$ einer zweiten Folge von Zuordnungen $(U_t^{-1})$ ist, die an einem mehrkanaligen optischen Empfänger (3) gespeichert sind, wobei jede der ersten und zweiten Folgen von Zuordnungen mindestens zwei verschiedene Zuordnungen umfasst, wobei der mehrkanalige optische Sender (1) umfasst:

eine Vielzahl von Symbolgeneratoren (12), wobei jeder Symbolgenerator (12) dazu eingerichtet ist, einen Symbolstrom (121) mit einer gemeinsamen Symbolrate basierend auf einem Teilstrom (111) des zu übertragenden Datenstroms (112) zu erzeugen, wobei jeder Symbolstrom (121) ein Symbol pro Zeitschlitz umfasst, wobei die Symbole der Symbolströme zu einem gegebenen Zeitschlitz einen Symbolvektor $(V_t)$ darstellen,
ein digitales Zuordnungsmodul (13) zum Durchführen der ersten Folge von Zuordnungen $(U_t)$ auf jedem Symbolvektor $(V_t)$, um einen zugeordneten Symbolvektor $(U_tV_t)$ zu erhalten,
eine Sendeeinheit (10), die zum Senden eines mehrkanaligen Signals (8) durch Multiplexen einer Vielzahl von Übertragungskanälen eingerichtet ist, wobei jeder Übertragungskanal mit einem Symbol des zugeordneten Symbolvektors $(U_tV_t)$ moduliert wird.

2. Mehrkanaliger optischer Sender (1) nach Anspruch 1, wobei die erste und zweite Folge von Zuordnungen periodische Folgen von Zuordnungen oder eine pseudozufällige Folge von Zuordnungen sind.

3. Mehrkanaliger optischer Sender (1) nach einem der Ansprüche 1 bis 2, wobei jede Zuordnung $(U_t, U_t^{-1})$ der ersten und zweiten Folge von Zuordnungen eine lineare Zuordnung ist.

4. Mehrkanaliger optischer Sender (1) nach einem der Ansprüche 1 bis 3, wobei jede Zuordnung ($U_t$, $U_t^{-1}$) der ersten und zweiten Folge von Zuordnungen eine Drehung ist.

5. Mehrkanaliger optischer Sender (1) nach einem der Ansprüche 1 bis 4, wobei die Vielzahl von Übertragungskanälen in das mehrkanalige Signal (8) unter Verwendung einer oder mehrerer Multiplextechniken einer Gruppe von Multiplextechniken, einschließlich Raummultiplexen, Frequenzmultiplexen, Zeitmultiplexen, Polarisationsmultiplexen, Wellenlängenmultiplexen, multimodales Multiplexen, Multicore-Multiplexen, Mehrträgermultiplexen und orthogonales Frequenzmultiplexen, gemultiplext wird.

6. Verfahren zum Übertragen eines Signals im optischen Bereich, wobei das Verfahren das Speichern einer ersten Folge von zeitlich aufeinanderfolgenden Zuordnungen ($U_t$) umfasst, wobei für jeden Zeitschlitz die Zuordnung ($U_t$) der ersten Folge die Umkehrung einer entsprechenden Zuordnung ($U_t^{-1}$) einer zweiten Folge von Zuordnungen ($U_t^{-1}$) ist, die an einem mehrkanaligen optischen Empfänger (3) gespeichert ist, wobei jede der ersten und zweiten Folge von Zuordnungen mindestens zwei verschiedene Zuordnungen umfassen, Erzeugen von Symbolströmen (121) mit einer gemeinsamen Symbolrate, wobei jeder Symbolstrom ein Symbol pro Zeitschlitz umfasst, wobei die Symbole der Symbolströme zu einem gegebenen Zeitschlitz einen Symbolvektor ($V_t$) darstellen, Durchführen der ersten Folge von Zuordnungen ($U_t$) auf jedem Symbolvektor ($V_t$), um einen zugeordneten Symbolvektor ($U_t V_t$) zu erhalten, Senden eines mehrkanaligen Signals (8), das eine Vielzahl von Übertragungskanälen multiplext, wobei jeder Übertragungskanal mit einem Symbol des zugeordneten Symbolvektors ($U_t V_t$) moduliert wird

7. Mehrkanaliger optischer Empfänger (3) zum Empfangen eines mehrkanaligen Signals (8) im optischen Bereich, wobei der mehrkanalige optische Empfänger (3) eine zweite Folge von zeitlich aufeinanderfolgenden Zuordnungen ($U_t^{-1}$) speichert, wobei für jeden Zeitschlitz die Zuordnung ($U_t^{-1}$) der zweiten Folge von Zuordnungen ($U_t^{-1}$) die Umkehrung einer entsprechenden Zuordnung ($U_t$) einer ersten Folge von Zuordnungen ($U_t$) ist, die auf dem mehrkanaligen Signal (8) gespeichert sind, wobei jede der ersten und zweiten Folge von Zuordnungen mindestens zwei verschiedene Zuordnungen umfasst, wobei der mehrkanalige optische Empfänger (3) umfasst:

eine Empfangseinheit (20), die zum Empfangen des mehrkanaligen Signals (8) und zum Extrahieren von empfangenen Symbolvektoren ($X_t$) eingerichtet ist, ein digitales umgekehrtes Zuordnungsmodul (23) zum Durchführen der zweiten Folge von Zuordnungen ($U_t^{-1}$) auf jedem Symbolvektor ($X_t$), um einen zugeordneten Symbolvektor ($R_t$) zu erhalten,

8. Mehrkanaliger optischer Empfänger (3) nach Anspruch 7, wobei die erste Folge von Zuordnungen ($U_t$) sowie die zweite Folge von Zuordnungen ($U_t^{-1}$) in synchronisierte Zeitsegmente gegliedert sind, wobei jede der ersten und zweiten Folge von Zuordnungen eine Zuordnung pro Zeitsegment umfasst, und wobei der zu übertragende Datenstrom (112) in Zeitrahmen gegliedert ist, wobei jeder Zeitrahmen einen Fehlererkennungs- und Fehlerkorrekturcode umfasst, wobei die Dauer eines Zeitrahmens länger als die Dauer eines Zeitabschnitts ist und wobei der mehrkanalige optische Empfänger (3) ein FEC-Modul (250) zum Durchführen von Fehlererkennung und -korrektur an den wiederhergestellten Symbolströmen (231) umfasst.

9. Mehrkanaliger optischer Empfänger (3) nach einem der Ansprüche 7 bis 8, wobei der Empfänger (3) ferner zum Messen des Rauschabstands des empfangenen Signals eingerichtet ist und wobei der Empfänger (3) zum Aktualisieren der ersten und zweiten Folge von Zuordnungen in Abhängigkeit vom gemessenen Rauschabstand des empfangenen Signals eingerichtet ist und die aktualisierte erste Folge von Zuordnungen an den Sender (1) sendet.

10. Verfahren zum Empfangen eines mehrkanaligen Signals (8) im optischen Bereich, wobei das Verfahren umfasst:

Speichern einer zweiten Folge von zeitlich aufeinanderfolgenden Zuordnungen ($U_t^{-1}$), wobei für jeden Zeitschlitz die Zuordnung ($U_t^{-1}$) der zweiten Folge von Zuordnungen ($U_t^{-1}$) die Umkehrung einer entsprechenden Zuordnung ($U_t$) einer ersten Folge von Zuordnungen ($U_t$) ist, die auf dem mehrkanaligen Signal (8) ausgeführt wird, Empfangen des mehrkanaligen Signals (8) und Extrahieren von empfangenen Symbolvektoren ($X_t$) und Durchführen der zweiten Folge von Zuordnungen ($U_t^{-1}$) auf jedem empfangenen Symbolvektor ($X_t$), um einen wiederhergestellten Symbolvektor ($R_t$) zu erhalten.

11. Optisches Kommunikationssystem (100) mit einem mehrkanaligen optischen Sender (1) nach einem der Ansprüche 1 bis 5, einem mehrkanaligen optischen Empfänger (3) nach einem der Ansprüche 7 bis 9 und einer optischen Verbindung (2), die den mehrkanaligen optischen Empfänger (3) mit dem mehrkanaligen optischen Sender (1) im optischen Bereich verbindet

**12.** Verfahren zum Durchführen einer optischen Kommunikation in einem optischen Kommunikationssystem mit einem mehrkanaligen optischen Sender (1), einem mehrkanaligen optischen Empfänger (3) und einer optischen Verbindung (2), die den mehrkanaligen optischen Empfänger (3) mit dem mehrkanaligen optischen Sender (1) im optischen Bereich verbindet, wobei das Verfahren umfasst, Speichern einer ersten Folge von zeitlich aufeinanderfolgenden Zuordnungen (*Ut*) am mehrkanaligen optischen Sender (1), Speichern einer zweiten Folge von zeitlich aufeinanderfolgenden Zuordnungen ($U_t^{-1}$) am mehrkanaligen optischen Empfänger (3), wobei für jeden Zeitschlitz die Zuordnung der ersten Folge die Umkehrung der Zuordnung der zweiten Folge ist, wobei jede der ersten und zweiten Folge von Zuordnungen mindestens zwei verschiedene Zuordnungen umfasst, wobei das Verfahren ferner am mehrkanaligen optischen Sender (1) umfasst: Erzeugen von Symbolströmen (121) mit einer gemeinsamen Symbolrate, wobei jeder Symbolstrom ein Symbol pro Zeitschlitz umfasst, wobei die Symbole der Symbolströme zu einem gegebenen Zeitschlitz einen Symbolvektor ($V_t$) darstellen, Durchführen der ersten Folge von Zuordnungen ($U_t$) auf jedem Symbolvektor ($V_t$), um einen zugeordneten Symbolvektor ($U_tV_t$) zu erhalten, Senden eines mehrkanaligen Signals (8) durch Multiplexen einer Vielzahl von Übertragungskanälen, wobei jeder Übertragungskanal mit einem Symbol des zugeordneten Symbolvektors ($U_tV_t$) moduliert wird wobei das Verfahren ferner am mehrkanaligen optischen Empfänger (3) umfasst: Empfangen des mehrkanaligen Signals (8) und Extrahieren von empfangenen Symbolvektoren ($X_t$) und Durchführen der zweiten Folge von Zuordnungen ($U_t^{-1}$) auf jedem empfangenen Symbolvektor ($X_t$), um einen wiederhergestellten Symbolvektor ($R_t$) zu erhalten.

**13.** Computerprogramm, umfassend ausführbaren Code, der bewirkt, dass ein Computer durch Ausführen alle Schritte eines Verfahrens nach Anspruch 12 durchführt.

**Revendications**

**1.** Émetteur optique multicanal (1) pour transmettre un signal multicanal (8) dans le domaine optique, dans lequel l'émetteur optique multicanal (1) stocke une première séquence de mises en correspondance ($U_t$) successives dans le temps, dans lequel, pour n'importe quel intervalle de temps, la mise en correspondance ($U_t$) de la première séquence est l'inverse d'une mise en correspondance correspondante ($U_t^{-1}$) d'une seconde séquence de mises en correspondance ($U_t^{-1}$) stockée au niveau d'un récepteur optique multicanal (3), dans lequel chacune des première et seconde séquences de mises en correspondance comprend au moins deux mises en correspondance distinctes, l'émetteur optique multicanal (1) comprenant :

une pluralité de générateurs de symbole (12), chaque générateur de symbole (12) étant configuré pour générer un flux de symboles (121) à un débit de symboles commun en se basant sur un sous-flux (111) du flux de données (112) à transmettre, chaque flux de symboles (121) comprenant un symbole par intervalle de temps, dans lequel les symboles des flux de symboles à un intervalle de temps donné constituent un vecteur de symbole ($V_t$),
un module de mise en correspondance numérique (13) pour effectuer la première séquence de mises en correspondance ($U_t$) sur chaque vecteur de symbole ($V_t$) afin d'obtenir un vecteur de symbole mis en correspondance ($U_t$, $V_t$),
une unité d'émission (10) configurée pour émettre un signal multicanal (8) multiplexant une pluralité de canaux de transmission, dans lequel chaque canal de transmission est modulé avec un symbole du vecteur de symbole mis en correspondance ($U_t$, $V_t$).

**2.** Émetteur optique multicanal (1) selon la revendication 1, dans lequel les première et seconde séquences de mises en correspondance sont des séquences périodiques de mises en correspondance ou des séquences pseudo-aléatoires de mises en correspondance.

**3.** Émetteur optique multicanal (1) selon l'une quelconque des revendications 1 à 2, dans lequel chaque mise en correspondance ($U_t$, $U_t^{-1}$) de la première et de la seconde séquence de mises en correspondance est une mise en correspondance linéaire.

**4.** Émetteur optique multicanal (1) selon l'une quelconque des revendications 1 à 3, dans lequel chaque mise en correspondance ($U_t$, $U_t^{-1}$) de la première et de la seconde séquence de mises en correspondance est une rotation.

**5.** Émetteur optique multicanal (1) selon l'une quelconque des revendications 1 à 4, dans lequel la pluralité de canaux de transmission sont multiplexés dans le signal multicanal (8) à l'aide d'une ou de plusieurs techniques de multiplexage d'un groupe de techniques de multiplexage comprenant un multiplexage dans l'espace, un multiplexage par répartition en fréquence, un multiplexage par répartition dans le temps, un multiplexage par répartition en polarisation, un multiplexage par répartition en longueur d'onde, un multiplexage multimodal, un multiplexage multicoeur, un multiplexage multiporteuse et un multiplexage par répartition orthogonale de la fréquence.

**6.** Procédé pour transmettre un signal dans le domaine optique, le procédé comprenant
le stockage d'une première séquence de mises en correspondance ($U_t$) successives dans le temps, dans lequel, pour n'importe quel intervalle de temps, la mise en correspondance ($U_t$) de la première séquence est l'inverse d'une mise en correspondance correspondante ($U_t^{-1}$) d'une seconde séquence de mises en correspondance ($U_t^{-1}$) stockée au niveau d'un récepteur optique multicanal (3), dans lequel chacune des première et seconde séquences de mises en correspondance comprend au moins deux mises en correspondance distinctes,
la génération de flux de symboles (121) à un débit de symboles commun, chaque flux de symboles comprenant un symbole par intervalle de temps, dans lequel les symboles des flux de symboles à un intervalle de temps donné constituent un vecteur de symbole ($V_t$),
la réalisation de la première séquence de mises en correspondance ($U_t$) sur chaque vecteur de symbole ($V_t$) afin d'obtenir un vecteur de symbole mis en correspondance ($U_t$, $V_t$), l'émission d'un signal multicanal (8) multiplexant une pluralité de canaux de transmission, dans lequel chaque canal de transmission est modulé avec un symbole du vecteur de symbole mis en correspondance ($U_t$, $V_t$).

**7.** Récepteur optique multicanal (3) pour recevoir un signal multicanal (8) dans le domaine optique, dans lequel le récepteur optique multicanal (3) stocke une seconde séquence de mises en correspondance ($U_t^{-1}$) successives dans le temps, dans lequel, pour n'importe quel intervalle de temps, la mise en correspondance ($U_t^{-1}$) de la seconde séquence de mises en correspondance ($U_t^{-1}$) est l'inverse d'une mise en correspondance correspondante ($U_t$) d'une première séquence de mises en correspondance ($U_t$) effectuée sur le signal multicanal (8), dans lequel chacune des première et seconde séquences de mises en correspondance comprend au moins deux mises en correspondance distinctes, le récepteur optique multicanal (3) comprenant :

une unité de réception (20) configurée pour recevoir le signal multicanal (8) et pour extraire des vecteurs de symbole reçus ($X_t$), un module de mise en correspondance inverse numérique (33) pour effectuer la seconde séquence de mises en correspondance ($U_t^{-1}$) sur chaque vecteur de symbole reçu ($X_t$) afin d'obtenir un vecteur de symbole restauré ($R_t$).

**8.** Récepteur optique multicanal (3) selon la revendication 7, dans lequel la première séquence de mises en correspondance ($U_t$) ainsi que la seconde séquence de mises en correspondance ($U_t^{-1}$) sont structurées en segments temporels synchronisés, chaque séquence des première et seconde séquences de mises en correspondance comprenant une mise en correspondance par segment temporel et dans lequel le flux de données (112) à transmettre est structuré en trames temporelles, chaque trame temporelle comprenant un code de détection et de correction d'erreurs, la durée d'une trame temporelle étant plus longue que la durée d'un segment temporel et dans lequel le récepteur optique multicanal (3) comprend un module FEC (250) pour effectuer une détection et une correction d'erreurs sur les flux de symboles restaurés (231).

**9.** Récepteur optique multicanal (3) selon l'une quelconque des revendications 7 à 8, dans lequel le récepteur (3) est en outre configuré pour mesurer le rapport signal sur bruit du signal reçu et dans lequel le récepteur (3) est configuré pour mettre à jour les première et seconde séquences de mises en correspondance en fonction du rapport signal sur bruit mesuré du signal reçu et pour envoyer la première séquence mise à jour de mises en correspondance à l'émetteur (1).

**10.** Procédé pour recevoir un signal multicanal (8) dans le domaine optique, le procédé comprenant :

le stockage d'une seconde séquence de mises en correspondance ($U_t^{-1}$) successives dans le temps, dans lequel, pour n'importe quel intervalle de temps, la mise en correspondance ($U_t^{-1}$) de la seconde séquence de mises en correspondance ($U_t^{-1}$) est l'inverse d'une mise en correspondance correspondante ($U_t$) d'une première séquence de mises en correspondance ($U_t$) effectuée sur le signal multicanal (8), la réception du signal multicanal (8) et l'extraction de vecteurs de symbole reçus ($X_t$) et la réa-

lisation de la seconde séquence de mises en correspondance $(U_t^{-1})$ sur chaque vecteur de symbole reçu $(X_t)$ afin d'obtenir un vecteur de symbole restauré $(R_t)$.

11. Système de communication optique (100) comprenant un émetteur optique multicanal (1) selon l'une quelconque des revendications 1 à 5, un récepteur optique multicanal (3) selon l'une quelconque des revendications 7 à 9 et une liaison optique (2) connectant le récepteur optique multicanal (3) à l'émetteur optique multicanal (1) dans le domaine optique.

12. Procédé pour effectuer une communication optique dans un système de communication optique comprenant un émetteur optique multicanal (1), un récepteur optique multicanal (3) et une liaison optique (2) connectant le récepteur optique multicanal (3) à l'émetteur optique multicanal (1) dans le domaine optique, le procédé comprenant
le stockage d'une première séquence de mises en correspondance $(U_t)$ successives dans le temps au niveau de l'émetteur optique multicanal (1),
le stockage d'une seconde séquence de mises en correspondance $(U_t^{-1})$ successives dans le temps au niveau du récepteur optique multicanal (3), dans lequel, pour n'importe quel intervalle de temps, la mise en correspondance de la première séquence est l'inverse de la mise en correspondance de la seconde séquence, dans lequel chaque séquence des première et seconde séquences de mises en correspondance comprend au moins deux mises en correspondance distinctes,
le procédé comprenant en outre, au niveau de l'émetteur optique multicanal (1), la génération de flux de symboles (121) à un débit de symboles commun, chaque flux de symboles comprenant un symbole par intervalle de temps, dans lequel les symboles des flux de symboles à un intervalle de temps donné constituent un vecteur de symbole $(V_t)$,
la réalisation de la première séquence de mises en correspondance $(U_t)$ sur chaque vecteur de symbole $(V_t)$ afin d'obtenir un vecteur de symbole mis en correspondance $(U_t, V_t)$, l'émission d'un signal multicanal (8) multiplexant une pluralité de canaux de transmission, dans lequel chaque canal de transmission est modulé avec un symbole du vecteur de symbole mis en correspondance $(U_t, V_t)$,
le procédé comprenant en outre, au niveau du récepteur optique multicanal (3), la réception du signal multicanal (8) et l'extraction de vecteurs de symbole reçus $(X_t)$ et la réalisation de la seconde séquence de mises en correspondance $(U_t^{-1})$ sur chaque vecteur de symbole reçu $(X_t)$ afin d'obtenir un vec-

teur de symbole restauré $(R_t)$.

13. Programme d'ordinateur comprenant un code exécutable qui contraint un ordinateur à réaliser toutes les étapes d'un procédé selon la revendication 12 lorsqu'il est exécuté.

Fig. 1

$V_t$

$W_t = U_t V_t$

$X_t$

$R_t$
$= U_t^{-1} H_t^{-1} X_t = U_t^{-1} H_t^{-1} H_t U_t V_t$
$= V_t$

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHU, CHEN ; SONG, BINHUANG ; CORCORAN, BILL et al.** Improved polarization dependent loss tolerance for polarization multiplexed coherent optical systems by polarization pairwise coding. *Optics express,* 2015, vol. 23 (21), 27434-27447
- **AWWAD, ELIE ; JAOUËN, YVES ; OTHMAN, GHAYA REKAYA-BEN.** Polarization-time coding for PDL mitigation in long-haul PolMux OFDM systems. *Optics express,* 2013, vol. 21 (19), 22773-22790
- **YAN HAN ; GUIFANG LI.** Coherent optical communication using polarization multiple-input-multiple-output. *Opt. Express,* 2005, vol. 13, 7527-7534
- **SEB J. SAVORY.** Digital filters for coherent optical receivers. *Opt. Express,* 2008, vol. 16, 804-817